(19) Europäisches Patentamt
European Patent Office
Office européen des brevets

(11) **EP 4 484 258 A1**

(12) **EUROPEAN PATENT APPLICATION**

(43) Date of publication:
**01.01.2025 Bulletin 2025/01**

(21) Application number: **23182777.5**

(22) Date of filing: **30.06.2023**

(51) International Patent Classification (IPC):
**B62D 15/02** (2006.01)  **B62D 6/00** (2006.01)

(52) Cooperative Patent Classification (CPC):
**B62D 15/025; B62D 6/002; B62D 15/0265;**
B62D 6/003

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **TOYOTA JIDOSHA KABUSHIKI KAISHA**
  **Toyota-shi, Aichi-ken 471-8571 (JP)**
• **Czech Technical University in Prague**
  **16627 Praha 6 (CZ)**

(72) Inventors:
• **CHUMERIN, Nikolay**
  **1140 Brussels (BE)**
• **EFREMOV, Denis**
  **16627 Praha (CZ)**
• **HANIS, Tomas**
  **16627 Praha (CZ)**
• **KLAUCO, Martin**
  **16627 Praha (CZ)**

(74) Representative: **Cabinet Beau de Loménie**
  **158, rue de l'Université**
  **75340 Paris Cedex 07 (FR)**

Remarks:
Amended claims in accordance with Rule 137(2)
EPC.

(54) **METHOD AND APPARATUS FOR DRIVER ASSISTANCE OF A MOVING VEHICLE**

(57) A computer-implemented method (20) for driver assistance of a moving vehicle, the method comprising:
a) receiving in real-time sensor data from at least one sensor (18), said sensor data being representative of the vehicle's surroundings;
b) determining a set of environmental constraints based on the received sensor data;
c) generating a model predictive control of the steering angles of the vehicle's wheels based at least on the determined environmental constraints, the vehicle's dynamic constraints, and the steering angles of the vehicle's wheels; and
d) adjusting actuation signals of said steering angles in order to meet the environmental constraints and the vehicle's dynamic constraints.

Fig. 2

20

21 → 22 → 221 → 222 → 23 → 231 → 232 → 233 → 234 → 24

EP 4 484 258 A1

**Description**

BACKGROUND OF THE INVENTION

1. Field of the invention

The present disclosure relates to the field of vehicle control systems and, more particularly, to a method for driver assistance of a moving vehicle.

2. Description of Related Art

Increased traffic density on the roads requires drivers of vehicles to pay full attention to surrounding vehicles while trying to avoid any possible obstacle on their travel path. However, as the human cannot remain continuously concentrated on all the tasks to be performed on the travel path in order to ensure its safety, this may lead to driving errors which can cause serious damage to the driver and their car and/or to the surroundings such as pedestrians or other vehicles.

Nearly all road accidents are due to human error, while the remaining accidents are attributed to environmental factors and mechanical features. In fact, human error is believed to play a role in 94% of accidents, encompassing driver's inattention, internal and external distractions, and inadequate surveillance. This makes driver failures or errors a significant concern for public safety.

The automation of vehicles then represents a major challenge for automotive safety and driving optimization. In an effort to eliminate human error while driving a vehicle, Advanced Driver Assistance Systems (ADAS), also known as "driver assistance systems" have been designed to guide the driver and assist him in risk anticipation by automating, improving, or adapting some or all of the tasks related to driving a vehicle. Thus, the driver can be relieved of tasks that may distract him.

These driver assistance systems rely generally on sensors to assist the driver throughout their journey and often communicate with a server to receive real-time information along the vehicle's route. Modern assistance driver systems also provide additional information related to the route, such as weather conditions, traffic congestion, duration, and disruptions on the road (diversions or lane closures, for example). The driver assistance system can also be configured to provide information, including regulatory indications, such as speed limits or the presence of checkpoints.

Driver assistance may further encompass secondary tasks such as location finding and obstacle detection. In particular, it enables the anticipation of potential collisions, such as with stationary objects (traffic barriers, signs, or trees, for example) or with moving objects like other vehicles.

To detect obstacles in the vehicle's environment, existing perception solutions are commonly used. They rely on sensors as front-facing cameras for lane detection and obstacle recognition. To increase the accuracy of such recognition, various obstacle detection systems have been developed by using data fusion, machine learning, and sensors such as LiDAR, radar, and GPS that collect data from the vehicle's external environment. The collected data is then processed, leading either to autonomous vehicle decisions (e.g. automatic braking, engine power limitation) or to transmission of information to the driver through visual alerts, audio signals, or steering wheel vibrations, leaving then the driver in charge of making decisions.

SUMMARY

In order to avoid collisions with recognized obstacles, algorithms have been developed that typically rely on the position of the vehicle with respect to said obstacles. These algorithms define a predefined evolving zone wherein the vehicle must remain to prevent such collisions.

However, these algorithms tend to avoid all recognized obstacles on the travel path of the vehicle, which makes driving difficult with all the curves that the vehicle has to perform to avoid each obstacle, whether or not it may cause damage to the vehicle and/or to its passengers.

Moreover, as these algorithms remain basic, they do not fully consider the dynamic characteristics of the vehicle as its weight distribution, which may lead at least to inadequate handling and instability of the vehicle. The driver may then face manoeuvring difficulties of the vehicle, especially in challenging driving conditions or emergency situations.

The object of the present invention is to at least substantially remedy the above-mentioned drawbacks.

In this respect, the present disclosure relates to a computer-implemented method for driver assistance of a moving vehicle, the method comprising:

a) receiving in real-time sensor data from at least one sensor, said sensor data being representative of the vehicle's surroundings;

b) determining a set of environmental constraints based on the received sensor data;

c) generating a model predictive control of the steering angles of the vehicle's wheels based at least on the determined environment constraints, the vehicle's dynamic constraints, and the steering angles of the vehicle's wheels; and

d) adjusting actuation signals of said steering angles in order to meet the environmental constraints and the vehicle's dynamic constraints.

For conciseness, the method is referred to hereinafter as the driver assistance method.

As used herein, for conciseness and unless the context indicates otherwise, "a", "an", and "the" are intended to refer to "at least one" or "each" and to include plural forms as well. Conversely, generic plural forms include the singular. Further, the "at least one sensor" comprises one sensor or a plurality of sensors.

According to the present disclosure, the sensor data obtained in real-time provides information about the environment in which the vehicle is operating. Such environment is also called the vehicle's surroundings, which may be a predetermined area in which the vehicle is located and thus comprise the physical space and objects around the vehicle, including but not limited to other vehicles, pedestrians, road infrastructure (lanes, signs and traffic signals for example) and/or obstacles.

In order to provide such real-time data information, the sensor may be an ultrasonic sensor, a radar sensor, or a LiDAR sensor that is configured to detect the presence and distance of potential objects around the vehicle. The sensor may also be a camera allowing for object recognition, lane detection, and traffic sign recognition, for example. These data then represent the vehicle's surroundings and may be used in combination with other sensors such as GPS system (for "Global Positioning Systems"), which may be configured to receive information on the location of the vehicle.

Said sensor may be an on-vehicle sensor or a part of a structure outside the vehicle and that is able to communicate with the vehicle.

Such real-time sensor data relating to the vehicle's surroundings may be then used to determine environmental constraints, which may refer to a set of limitations or restrictions on the vehicle's operation. In particular, environmental constraints may include, without limitation, physical obstacles encountered on the vehicle's path, such as parked vehicles, pedestrians, cyclists, or construction zones. The environmental constraints may refer then to a path wherein it is possible to drive the vehicle without facing an undrivable obstacle, i.e. which may cause damage to the vehicle and/or to the passengers of the vehicle. In other words, the environmental constraints may refer to a path wherein it is possible for the vehicle to drive over an obstacle without causing damage to the passengers and/or to the vehicle.

In addition to said environmental constraints, the driver assistance method comprises using said vehicle's dynamic constraints and the steering angles of the vehicle's wheels in order to generate a model predictive control of the steering angles of the vehicle's wheels.

The vehicle's dynamic constraints define the limitations or restrictions imposed by the physical capabilities and characteristics of the vehicle during its motion. These constraints may be related to the vehicle's dynamics, performance, and mechanical properties. As an example, the dynamic constraints comprise maximum torque, engine RPM (for "Revolution Per Minute") limit, and transmission gear ratios.

The model predictive control of the steering angles of the vehicle's wheels is then generated by taking into account the determined environmental constraints, the vehicle dynamic constraints, and the steering angles in real-time of the vehicle's wheels.

Accordingly, such generated model predictive control may be a control strategy that uses a predictive model based on the vehicle's dynamics constraints and the environmental constraints to determine and optimize the steering commands in real-time. In other words, by predicting the vehicle's future states and optimizing the steering angles, the model predictive control can adjust the wheel angles to meet the environmental constraints and the vehicle's dynamic constraints.

Actuation signals are then used to adjust the steering angles according to the generated model predictive control. Such actuation signals may refer to control inputs that are applied to the vehicle's steering system to obtain the desired rotation angles of the wheels. These signals may be responsible for turning the wheels and steering the vehicle in a specific direction by translating the desired angles into actual movements of the wheels.

Optionally, the model predictive control comprises solving an optimization control problem.

The aim of solving said optimization control problem is to find the optimal control inputs, i.e., the angles of the wheels, that lead to meeting the environmental constraints and the vehicle's dynamic constraints. It is well-known that a person skilled in the art, with its general knowledge, can solve the optimization control problem with the different known mathematical methods.

Optionally, the model predictive control is a non-linear nonconvex constrained finite time optimal control problem.

Of course, the problem formulation can also be solved with a linear convex model predictive control.

Optionally, the computer-implemented method comprises continuously repeating steps a) to d) on a part or on all of the moving vehicle's path.

In other words, the driver assistance method may be performed on an autonomous vehicle or semi-automated vehicle wherein it is possible to repeat said driver assistance method on the entire path or on a part of the path to be travelled by the vehicle.

Optionally, the vehicle's surroundings comprise at least one potential obstacle.

"Potential obstacle" means that the vehicle's surroundings may not include an obstacle.

Optionally, said at least one potential obstacle is a stationary object or a moving object.

The "stationary objects" are fixed or immobile in the vehicle's surroundings, such as parked cars, traffic barriers, road signs, buildings, or trees. While these objects are not currently obstructing the vehicle's path, they have the potential to become obstacles that may cause a collision with the moving vehicle if it approaches them too closely or deviates from its intended path.

The "moving objects" are in motion within the vehicle's surroundings, including other vehicles, pedestrians, cyclists, or animals. These moving objects have the potential to intersect with the vehicle's path and create a collision risk if their trajectories converge.

Optionally, each identified obstacle is associated with a defined priority level.

In other words, each identified (or detected) obstacle is assigned a specific priority level or ranking based on its perceived potential risk to the passengers' safety and/or to the vehicle's integrity. The priority level helps to determine the order in which the obstacles are addressed.

Optionally, said environmental constraints comprise position boundaries of the wheels of the moving vehicle that are defined based on sensor data and at least one undrivable obstacle among the potential obstacles(s) present in the environment of the vehicle.

Further and not without limitation, the environmental constraints may comprise additional regulations or constraints imposed by an authority, such as a speed limit.

Optionally, the height of said at least one undrivable obstacle is higher than the height of the chassis of the moving vehicle.

Optionally, the environmental constraints comprise a constraint that excludes the position coordinates of the undrivable obstacle(s) as a possible position of the wheels or as a possible position of the center of the front axle of the vehicle according to a longitudinal axis of said front axle.

Optionally, the environmental constraints comprise a constraint that defines the possible positions of the wheels which are delimited by parabolic boundaries.

Optionally, said boundaries correspond to a drivable path of the vehicle's wheels, the drivable path being a regular road or in the form of ruts.

Optionally, said vehicle's surroundings comprise at least one driving surface irregularity.

A driving surface irregularity may cause discomfort to the passengers or may cause damage to the vehicle.

Optionally, the at least one driving surface irregularity comprises potholes and/or ice pads and/or bricks.

The present disclosure further relates to a computer program set including instructions for executing the steps of the above-described computer-implemented method when said program set is executed by one computer.

This program set can use any programming language and take the form of source code, object code, or a code intermediate between source code and object code, such as a partially compiled form or any other desirable form.

The present disclosure further relates to an apparatus for driver assistance of a moving vehicle, the apparatus comprising:

- a receiving module configured to receive in real-time sensor data from at least one sensor, said sensor data being representative of the vehicle's surroundings;
- a setting module configured to determine a set of environmental constraints based on the received sensor data;
- a generating module configured to generate a model predictive control of the steering angles of the vehicle's wheels based at least on the determined environmental constraints, the vehicle's dynamic constraints, and the steering angles of the vehicle's wheels; and
- an adjusting module configured to adjust actuation signals of said steering angles in order to meet the environmental constraints and the vehicle's dynamic constraints.

The apparatus, referred to hereinafter as the driver assistance system, may be configured to carry out the above-mentioned driver assistance method and may have part or all of the above-described features. The driving apparatus may have the hardware structure of a computer.

The present disclosure also relates to a vehicle comprising an apparatus for driver assistance, as described above.

The term "vehicle" may be directed to an apparatus capable of transporting people or objects from one location to another, such as a car or a motorcycle.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- Fig. 1 is a block diagram of a driver assistance apparatus according to an embodiment of the present disclosure;
- Fig. 2 is a flowchart of a driver assistance method according to an embodiment of the present disclosure; and
- Fig. 3 illustrates two examples of an environmental envelope according to an embodiment of the present disclosure.

DETAILD DESCRIPTION OF EMBODIMENTS

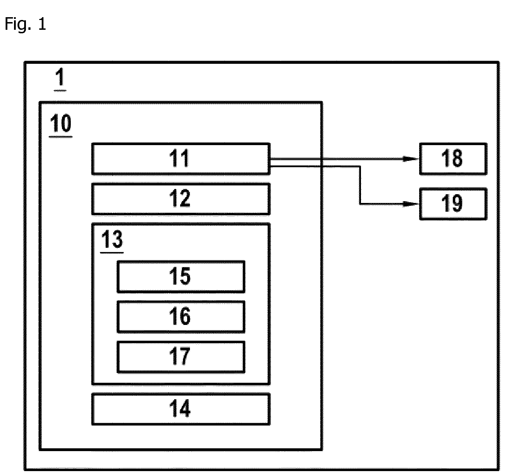

Figure 1 shows a block diagram of a driver assistance apparatus 10 comprising a receiving module 11, a setting module 12, a generating module 13, and an adjusting module 14 according to embodiments of the present disclosure. The driver assistance apparatus 10 may be located inside a vehicle 1 which may be, without limitation, autonomous or semi-autonomous vehicles.

The driver assistance apparatus 10 may be configured to provide assistance to the driver in controlling and manoeuvring in real-time the vehicle 1 and thus avoiding potential collisions that may cause damages to the passengers of the vehicle 1 and/or to the vehicle 1 itself. Such vehicle 1 may be directed to an apparatus capable of transporting people or objects from one location to another, such as a car or a motorcycle, and may be categorized into different levels based on the extent of automation and human involvement in the driving tasks.

The driver assistance apparatus 10 may comprise an electronic circuit, a processor (shared, dedicated, or group), a combinational logic circuit, a memory that executes one or more software programs, and/or other suitable components that provide the described functionality. In other words, the driver assistance apparatus 10 may be a computer device. The driver assistance apparatus 10 may be connected to a memory, which may store data, e.g., at least one computer program, which, when executed, carries out the driver assistance method according to the present disclosure.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk.

Alternatively, the memory can be an integrated circuit in which the program is incorporated, the circuit being adapted to execute the driver assistance method or to be used in its execution.

The receiving module 11 is a module for receiving in real-time sensor data from at least one on-vehicle sensor. Such sensor data may be representative of the vehicle's surroundings. The receiving module 11 may be implemented as software running on the driver assistance apparatus 10 or may be implemented partially or fully as a hardware element of the driver assistance apparatus 10.

The setting module 12 is a module for determining a set of environmental constraints based on the received sensor data from the receiving module 11. The setting module 12 may be implemented as software running on the driver assistance apparatus 10 or may be implemented partially or fully as a hardware element of the driver assistance apparatus 10. In particular, the driver assistance 10 may comprise a program that includes both the receiving module 11 and the setting module 12. Alternatively, the receiving module 11 may be realized as an independent program (in particular, beside a program forming the setting module 12).

The generating module 13 is a module for generating a model predictive control of the steering angles of the vehicle's wheels based at least on the determined environmental constraints, the vehicle's dynamic constraints, and the steering angles of the vehicle's wheels. Accordingly, the generating module 13 may comprise a first memory 15 configured to receive and store in real-time the determined environmental constraints, a second memory 16 configured to store the vehicle's dynamic constraints, and a third memory 17 configured to receive and store the current steering angles of the vehicle's wheels. The first memory 15, the second memory 16, and the third memory 17 can be a ROM or a microelectronic circuit ROM.

The generating module 13 may be implemented as software running on the driver apparatus 10 interacting with the first memory 15, the second memory 16, and the third memory 17. The generating module 13 may also be implemented partially or fully on the driver assistance apparatus 10 as a hardware element of the driver assistance apparatus 10.

In particular, the driver assistance 10 may comprise a program that includes together the receiving module 11, the setting module 12, and the generating module 13. Alternatively, the generating module 13 may be realized as an independent program (in particular, beside a program forming both the setting module 12 and the receiving module 11, or beside a program forming the setting module 12 and beside a program forming the receiving module 11).

The adjusting module 14 is a module for adjusting actuation signals of said steering angles in order to meet the environmental constraints and the vehicle's dynamic constraints. The adjusting module 14 may be implemented as software running on the driver assistance apparatus 10 or may be implemented partially or fully as a hardware element of the driver assistance apparatus 10. In particular, the driver assistance 10 may comprise a program which includes together the receiving module 11, the setting module 12 and the generating module 13. Alternatively, the adjusting module 14 may be realized as independent program (in particular beside a program forming together the setting module 12, the receiving module 11, and the generating module 13, or beside a program forming the setting module 12, beside a program forming the receiving module 11 and beside a program forming the generating module 13).

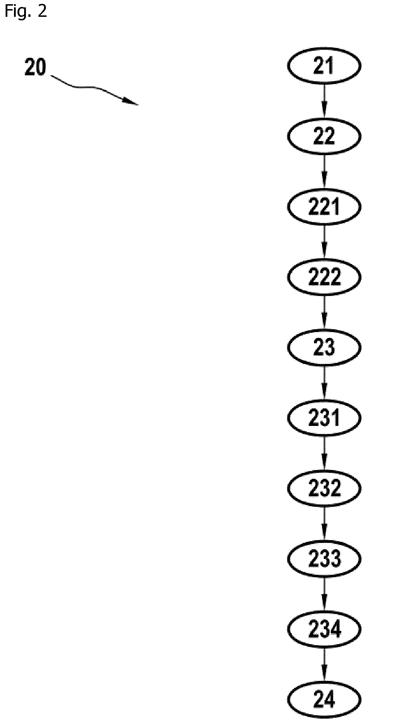

The tasks carried out by the driver assistance apparatus 10 are detailed hereinafter with respect to the corresponding driver assistance method, an embodiment of which is illustrated in Fig. 2.

Figure 2 is a flowchart of the driver assistance method 20 according to an embodiment of the present disclosure. The driver assistance method 20 is a method for providing assistance to the driver in controlling and manoeuvring in real-time the vehicle 1 and thus avoiding potential collisions that may cause damages to the passengers of the vehicle 1 and/or to the vehicle 1 itself.

The driver assistance method 20 comprises a step 21 of receiving in real-time, by the receiving module 11, sensor data from at least one on-vehicle sensor 18 illustrated in Figure 1, wherein said sensor data are representative of the vehicle's surroundings. More precisely, the sensor data obtained in real-time provides data information about the environment in which the vehicle 1 is operating. Such environment is also called the vehicle's surroundings which may be a predetermined area in which the vehicle 1 is located and thus comprise the physical space and objects around the vehicle 1, including but not limited to other vehicles, pedestrians, road infrastructure (lanes, signs and traffic signals, for example) and/or obstacles.

In order to provide real-time data information, the on-vehicle sensor 18 may be an ultrasonic sensor, a radar sensor, or a LiDAR sensor that is configured to detect the presence and distance of potential obstacles around the vehicle. The on-vehicle sensor 18 may also be a camera allowing for object recognition and lane detection. These data then represent the vehicle's surroundings and may be used in combination with other on-vehicle sensors 19, illustrated in Figure 1, as GPS system (for "Global Positioning Systems") that is configured to receive information on the location of the vehicle 1.

That is, the driver assistance method 20 further comprises a step 22 performed by the setting module 12 to determine a set of environmental constraints based on said received sensor data. Such environmental constraints may refer to a set of limitations or restrictions on the vehicle's operation. In particular, environmental constraints may include, without limitation, physical obstacles encountered on the vehicle's path, such as parked vehicles, pedestrians, cyclists, or construction zones. More precisely, the environmental constraints may refer then to a path wherein it is possible to drive the vehicle without facing an undrivable obstacle, i.e. which may cause damage to the vehicle and/or the passengers of the vehicle, and wherein it is possible to the vehicle to drive over a drivable obstacle without causing damage to the passengers and/or to the vehicle 1.

For example, the undrivable obstacle may be in the form of cars, pedestrians, trailers, and other bigger objects which could be met on the path. More generally, an obstacle may be considered undrivable when its height is higher than the height of the chassis of the vehicle 1.

The drivable obstacle can be in the form of ice pads, potholes, bricks, or other road irregularities that may cause discomfort to the passengers or may cause damage to the vehicle.

It should be noted that a drivable or undrivable obstacle may be a stationary object, a moving object, or any other object that could cause a collision with the moving vehicle. In particular, the "stationary objects" are fixed or immobile in the vehicle's surroundings, such as parked cars, traffic barriers, road signs, buildings, or trees. While these objects are not currently obstructing the vehicle's path, they have the potential to become obstacles that may cause a collision with the moving vehicle 1 if it approaches them too closely or deviates from its intended path. The "moving objects" are in motion within the vehicle's surroundings, including other vehicles, pedestrians, cyclists, or animals. These moving objects have the potential to intersect with the vehicle's path and create a collision risk if their trajectories converge.

In order to determine the environmental constraints (or environmental envelope) based on said received sensor data, the environmental constraints may be considered as a set of points of the surroundings of the vehicle 1 that are transformed into the vehicle's coordinate frame. Such coordinates may exclude the position coordinates of identified undrivable obstacles as a possible position of the wheels of the vehicle 1 or as a possible position of the center of the front axle of the vehicle 1 according to a longitudinal axis of said front axle.

Optionally, in order to determine the order in which the obstacles are addressed by the driver assistance apparatus 10, each identified obstacle may be associated with a defined priority level or ranking based on its perceived potential risk to the passengers' safety and/or to the vehicle's integrity. This ranking provides several advantages in the context of obstacle detection and avoidance. In fact, assigning a ranking to each identified obstacle, helps in prioritizing the decision-making process. The driver assistance apparatus 10 can thus allocate its resources based on the potential risk of each obstacle. Also, it helps to differentiate between obstacles that pose an immediate or high-risk threat versus those that are more distant to the vehicle 1. For example, a drivable obstacle may be ranked "1" while an undrivable obstacle may be ranked "2" knowing that the higher is the number, the higher is the risk.

An example of sub-steps 221 and 222 of determining the environmental constraints is described below. Of course, this description is only considered as an example and thus does not delimitate the present disclosure.

In step 221, the setting module 12 collects sensor data provided by the receiving module 11. In particular, the setting module 12 collects the coordinates of the path boundaries so that the environmental constraints comprise a constraint that defines the possible positions of the wheels of the vehicle delimited by said boundaries. As an example, the coordinates of the path boundaries may be provided by the on-vehicle sensor 18 being an ultrasonic sensor, a LiDAR sensor, or a camera. Data collected by the on-vehicle sensor 18 may be processed in order to be translated into coordinates in planar space.

The path boundaries are then represented in step 222 as sets of points in the planar space representing the surroundings of the vehicle 1. Such boundaries may be delimited in the form of parabolic curves according to equation (1) below:

$$y_{road} = \alpha_2 \, x_{road}^2 + \alpha_1 \, x_{road} + \alpha_0 , \qquad (1)$$

wherein coefficients $\alpha_n$ (n ∈ [0, 1, 2]) are obtained by the well-known process "curve fitting"; and
$x_{road}$ and $y_{road}$ are the positions of path boundaries.

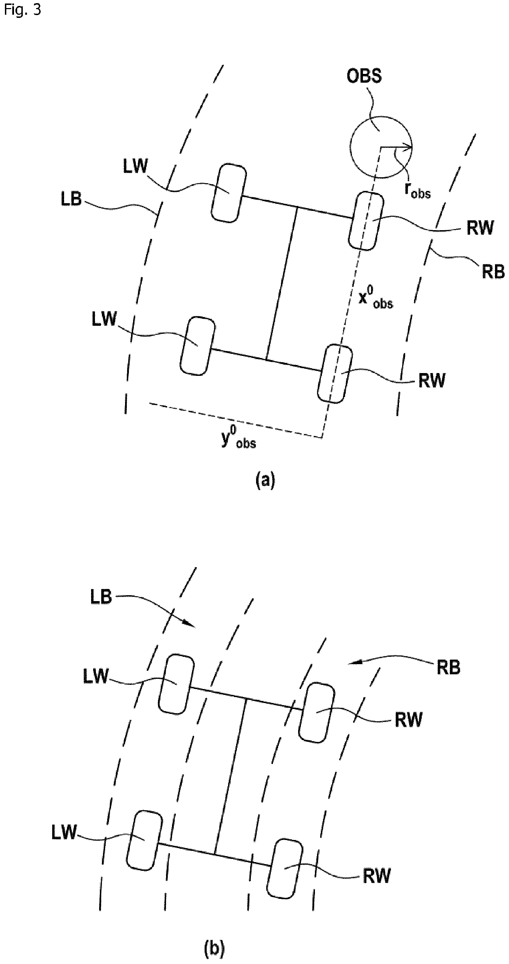

The parabolic function may be chosen because it is twice differentiable and could then be used to define paved and unpaved roads on which vehicle 1 could be driven. For example, and as illustrated in Fig. 3, a path (a) delimits a regular road with a left boundary LB and a right boundary RB. In this case, the environmental constraints (or environmental envelope) comprise a constraint wherein a left front and rear wheels LW together with a right front and rear wheels RW of the vehicle 1 must remain between the left boundary LB and the right boundary RB.

The path (a) also comprises an obstacle OBS identified by the on-vehicle sensor 18, the obstacle OBS being considered as drivable. As the vehicle 1 can drive over the obstacle OBS without causing damage to the passengers and/or to the vehicle 1 itself, the drivable obstacle OBS is thus located, as well as the vehicle 1, between the left boundary LB and the right boundary RB in the planar space. In other words, the path (a) may be considered as the environmental envelope wherein the vehicle 1 must remain to prevent collisions causing damages.

The drivable obstacle OBS may be represented in the form of a circle according to the known circle-equation (2):

$$(r_{obs})^2 = (x_{obs} - x_{obs}^0)^2 + (y_{obs} - y_{obs}^0)^2, \qquad (2)$$

wherein $r_{obs}$ represents a radius of the circle, which bounds the drivable obstacle; and
$x_{obs}^0$ and $y_{obs}^0$ are position coordinates of the drivable obstacle in planar space.

Of course, a person skilled in the art may choose to give a different geometrical shape to the drivable obstacles by using well-known mathematical techniques or using a combination of circles or ellipses to mathematically describe more complex obstacles.

Alternatively, if the obstacle identified by the on-vehicle sensor 18 is considered an undrivable obstacle, it may be located outside of the boundaries LB and RB of the path (a) and thus outside the environmental envelope. In such case, the vehicle 1, which must remain between the left boundary LB and the right boundary RB, cannot collide with the undrivable obstacle.

Figure 3 also illustrates a path (b) delimiting a road by the left boundary LB and the right boundary RB in the form of ruts. In such case, the environmental constraints (or environmental envelope) may comprise a constraint wherein left front and rear wheels LW must remain inside the left rut boundary LB and wherein the right front and rear wheels RW must remain inside the right rut boundary RB to prevent collisions causing damages.

Of course, a person skilled in the art may choose to give a different contour to the path boundaries by using well-known mathematical techniques.

The driver assistance method 20 further comprises a step 23 performed by the generating module 13 to generate a model predictive control of the steering angles of the vehicle's wheels RW and LW. Such generated model predictive control may be a control strategy that uses a predictive model which may be based on the vehicle's dynamics constraints and the determined environmental constraints of the vehicle 1 to determine and optimize the steering commands of the wheels RW and LW of the vehicle 1 in real-time. In other words, by predicting the vehicle's future states and optimizing the steering angles, the model predictive control can adjust the wheel angles to meet the environmental constraints and the vehicle's dynamic constraints.

The step 23 comprises sub-steps 231, 232, 233 and 234 described below. Of course, this description is only considered as an example and thus does not delimitate the present disclosure.

In sub-step 231, the generating module 13 collects in real-time data representative of the determined environmental constraints and stores them into the first memory 15.

In sub-step 232, the generating module 13 collects in real-time data representative of the vehicle's dynamic constraints and store them into the second memory 16. The vehicle's dynamic constraints may define the limitations or restrictions imposed by the physical capabilities and characteristics of the vehicle 1 during its motion. These dynamic constraints may be related to the vehicle's dynamics, performance and mechanical properties.

To be processed with data relating to the environmental constraints, the dynamic constraints data may be translated in the planar space. Accordingly, in sub-step 233, the generating module 13 may linearize a continuous-time single-track model to describe the vehicle's motion as defined below with equation (3):

$$\dot{x} = Ax(t) + Bu(t) + q, \qquad (3)$$

wherein

$$x = \begin{bmatrix} \beta & r & p_x & p_y & \psi \end{bmatrix}^T, u = [\delta],$$

and

$$A = \begin{bmatrix} -\dfrac{c_f F_{zf} + c_r F_{zr}}{mv} & \dfrac{l_r c_r F_{zr} - l_f c_f F_{zf}}{mv^2} - 1 & 0 & 0 & 0 \\ \dfrac{l_r c_r F_{zr} - l_f c_f F_{zf}}{I} & -\dfrac{l_r^2 c_r F_{zr} + l_f^2 c_f F_{zf}}{vI} & 0 & 0 & 0 \\ 0 & 0 & 0 & 0 & 0 \\ v & 0 & 0 & 0 & v \\ 0 & 1 & 0 & 0 & 0 \end{bmatrix}$$

$$B = \begin{bmatrix} \dfrac{c_f F_{zf}}{mv} & \dfrac{l_f c_f F_{zf}}{I} & 0 & 0 & 0 \end{bmatrix}^T, \quad q = \begin{bmatrix} 0 & 0 & v & 0 & 0 \end{bmatrix}^T.$$

$\beta$ being the sideslip angle in [rad] at the center of gravity of the vehicle;
r being the yaw rate at the center of gravity of the vehicle in [rad.s$^{-1}$];
$p_x$ being the position coordinate in [m] of the wheels according to the longitudinal direction of the planar space;
$p_y$ being the position coordinate of the wheels in [m] according to the lateral direction of the planar space;
$\psi$ being the heading of the vehicle in [rad];
$\delta$ being the steering angle of the front axle of the vehicle in [rad];
$c_f$ being a nominal cornering stiffness of the front axle in [N/rad];
$c_r$ being a nominal cornering stiffness of the rear axle in [N/rad];
$F_{zr}$ being the load force of the front axle of the vehicle in [N];
$F_{zf}$ being the load force of the rear axle of the vehicle in [N];
$l_f$ being the distance between the front axle and the center of gravity of the vehicle in [m];
$l_r$ being the distance between the rear axle and the center of gravity of the vehicle in [m];
v being the vehicle speed at the center of gravity of the vehicle in [m.s$^{-1}$];
I being the yaw moment of inertia at the center of gravity of the vehicle in [kg m$^2$]; and
m being the vehicle mass in [kg].

In the matrices above, the vehicle's speed v and load forces for the front $F_{zf}$ and the rear $F_{zr}$ axles may be assumed as time-variant parameters of the single-track model.

The discrete-time vehicle dynamics are then defined as follows by, for example, performing Euler discretization or any other discretization method of the continuous-time single track model of equation (3):

$$x_{k+1} = A_{\mathrm{d}} x_k + B_{\mathrm{d}} u_k + q_{\mathrm{d}}, \tag{4}$$

The positions $p_x$ and $p_y$ of each wheel may be calculated from its placement according to the center of gravity of the vehicle 1 and may be updated continuously during the movement of the vehicle 1. To this end, such calculation may be performed according to equation (5):

$$\begin{bmatrix} p_{\mathrm{x}ij} \\ p_{\mathrm{y}ij} \end{bmatrix} = \begin{bmatrix} p_{\mathrm{x}} \\ p_{\mathrm{y}} \end{bmatrix} + d_{ij} \begin{bmatrix} \cos(\zeta_{ij} + \psi) \\ \sin(\zeta_{ij} + \psi) \end{bmatrix}, \tag{5}$$

wherein $i \in \{f, r\}$ for respectively front and rear wheels;
$j \in \{l, r\}$ for respectively left and right wheels; and
d being the distance between the center of gravity of the vehicle and a wheel's anchor point computed as follows with equation (6):

$$d_{ij} = \sqrt{l_i^2 + w^2}, \tag{6}$$

wherein $\omega$ is the half of the width of the wheel base in [m].

The anchor angle $\zeta$ may become positive for a first side of the vehicle and negative for a second side of the vehicle facing the first side. The anchor angle $\zeta$ may be defined as:

$$\zeta_{ij} = \pm \arctan \frac{w}{l_i}. \tag{7}$$

With the position $p_x$ and $p_y$ of the wheels and their steering angles stored in the third memory 17, the generating module 13 may generate in sub-step 234 the model predictive control of the steering angles of the vehicle's wheels based also on the determined environmental constraints and the vehicle's dynamic constraints.

The model predictive control may be then formulated as a nonlinear nonconvex constrained finite time optimal control problem.

Finally, the driver assistance method 20 further comprises a step 24 performed by the adjusting module 14 to adjust actuation signals of said steering angles in order to meet the environmental constraints and the vehicle's dynamic constraints. Such actuation signals are then used to adjust the steering angles according to the generated model predictive control. The actuation signals may refer to control inputs that are applied to the vehicle's steering system to obtain the desired angles of the wheels. These signals may be responsible for turning the wheels and steering the vehicle in a specific direction by translating the desired angles into actual movements of the wheels.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method (20) for driver assistance of a moving vehicle, the method comprising:

   a) receiving in real-time sensor data from at least one sensor (18), said sensor data being representative of the vehicle's surroundings;
   b) determining a set of environmental constraints based on the received sensor data;
   c) generating a model predictive control of the steering angles of the vehicle's wheels based at least on the determined environmental constraints, the vehicle's dynamic constraints, and the steering angles of the vehicle's wheels; and
   d) adjusting actuation signals of said steering angles in order to meet the environmental constraints and the vehicle's dynamic constraints.

2. The computer-implemented method (20) according to claim 1, wherein the model predictive control comprises solving an optimization control problem.

3. The computer-implemented method (20) according to claim 2, wherein the model predictive control is a non-linear nonconvex constrained finite time optimal control problem.

4. The computer-implemented method (20) according to any one of claims 1 to 3, comprising continuously repeating steps a) to d) on a part or on all of the moving vehicle's path.

5. The computer-implemented method (20) according to any one of claims 1 to 4, wherein the vehicle's surroundings comprise at least one potential obstacle (OBS).

6. The computer-implemented method according to claim 5, wherein said at least one potential obstacle (OBS) is a stationary object or a moving object.

7. A computer-implemented method (20) according to any one of claim 5 or 6, wherein each identified obstacle (OBS) is associated with a defined priority level.

8. The computer-implemented method (20) according to any one of claims 5 to 7, wherein said environmental constraints comprise position boundaries of the wheels of the moving vehicle (1) that are defined based on sensor data and at least one undrivable obstacle (OBS) among the potential obstacle(s) present in the environment of the vehicle (1).

9. The computer-implemented method (20) according to claim 8, wherein the height of said at least one undrivable obstacle (OBS) is higher than the height of the chassis of the moving vehicle.

10. The computer-implemented method (20) according to claim 8 or 9, wherein the environmental constraints comprise a constraint that excludes the position coordinates of the undrivable obstacle(s) (OBS) as a possible position of the wheels or as a possible position of the center of the front axle of the vehicle (1) according to a longitudinal axis of said front axle.

11. The computer-implemented method (20) according to any one of claims 8 to 10, wherein the environmental constraints comprise a constraint that defines the possible positions of the wheels which are delimited by parabolic boundaries.

12. The computer-implemented method (20) according to claim 11, wherein said boundaries correspond to a drivable path of the vehicle's wheels, the drivable path being a regular road or in the form of ruts.

13. The computer-implemented method (20) according to any one of claims 1 to 12, wherein said vehicle's surroundings comprise at least one driving surface irregularity.

14. The computer-implemented method (20) according to claim 13, wherein the at least one driving surface irregularity comprises potholes and/or ice pads and/or bricks.

15. A computer program set including instructions for executing the steps of the method of any one of claims 1 to 14 when said program set is executed by at least one computer.

16. An apparatus for driver assistance (10) of a moving vehicle (1), the apparatus (10) comprising:

   - a receiving module (11) configured to receive in real-time sensor data from at least one sensor (18), said sensor data being representative of the vehicle's surroundings;
   - a setting module (12) configured to determine a set of environmental constraints based on the received sensor data;
   - a generating module (13) configured to generate a model predictive control of the steering angles of the vehicle's wheels based at least on the determined environmental constraints, the vehicle's dynamic constraints, and the steering angles of the vehicle's wheels; and

- an adjusting module (14) configured to adjust actuation signals of said steering angles in order to meet the environmental constraints and the vehicle's dynamic constraints.

17. A vehicle (1) comprising an apparatus for driver assistance (10) according to claim 16.

**Amended claims in accordance with Rule 137(2) EPC.**

1. A computer-implemented method (20) for driver assistance of a moving vehicle, the method comprising:

> a) receiving in real-time sensor data from at least one sensor (18), said sensor data being representative of the vehicle's surroundings;
> b) determining a set of environmental constraints based on the received sensor data;
> c) generating a model predictive control of the steering angles of the vehicle's wheels based at least on the determined environmental constraints, the vehicle's dynamic constraints, and the steering angles of the vehicle's wheels; and
> d) adjusting actuation signals of said steering angles in order to meet the environmental constraints and the vehicle's dynamic constraints,

the computer-implemented method being **characterized in that** the model predictive control comprises solving an optimization control problem, which is a non-linear nonconvex constrained finite time optimal control problem.

2. The computer-implemented method (20) according to claim 1, comprising continuously repeating steps a) to d) on a part or on all of the moving vehicle's path.

3. The computer-implemented method (20) according to claim 1 or 2, wherein the vehicle's surroundings comprise at least one potential obstacle (OBS).

4. The computer-implemented method according to claim 3, wherein said at least one potential obstacle (OBS) is a stationary object or a moving object.

5. A computer-implemented method (20) according to any one of claim 3 or 4, wherein each identified obstacle (OBS) is associated with a defined priority level.

6. The computer-implemented method (20) according to any one of claims 3 to 5, wherein said environmental constraints comprise position boundaries of the wheels of the moving vehicle (1) that are defined based on sensor data and at least one undrivable obstacle (OBS) among the potential obstacle(s) present in the environment of the vehicle (1).

7. The computer-implemented method (20) according to claim 6, wherein the height of said at least one undrivable obstacle (OBS) is higher than the height of the chassis of the moving vehicle.

8. The computer-implemented method (20) according to claim 6 or 7, wherein the environmental constraints comprise a constraint that excludes the position coordinates of the undrivable obstacle(s) (OBS) as a possible position of the wheels or as a possible position of the center of the front axle of the vehicle (1) according to a longitudinal axis of said front axle.

9. The computer-implemented method (20) according to any one of claims 6 to 10, wherein the environmental constraints comprise a constraint that defines the possible positions of the wheels which are delimited by parabolic boundaries.

10. The computer-implemented method (20) according to claim 9, wherein said boundaries correspond to a drivable path of the vehicle's wheels, the drivable path being a regular road or in the form of ruts.

11. The computer-implemented method (20) according to any one of claims 1 to 10, wherein said vehicle's surroundings comprise at least one driving surface irregularity.

12. The computer-implemented method (20) according to claim 11, wherein the at least one driving surface irregularity comprises potholes and/or ice pads and/or bricks.

13. A computer program set including instructions for executing the steps of the method of any one of claims 1 to 12 when said program set is executed by at least one computer.

14. An apparatus for driver assistance (10) of a moving vehicle (1), the apparatus (10) comprising:

- a receiving module (11) configured to receive in real-time sensor data from at least one sensor (18), said sensor data being representative of the vehicle's surroundings;
- a setting module (12) configured to determine a set of environmental constraints based on the received sensor data;
- a generating module (13) configured to generate a model predictive control of the steering angles of the vehicle's wheels based at least on the determined environmental constraints, the vehicle's dynamic constraints, and the steering angles of the vehicle's wheels; and
- an adjusting module (14) configured to adjust actuation signals of said steering angles in order to meet the environmental constraints and the vehicle's dynamic constraints,

the apparatus being **characterized in that** the model predictive control comprises solving an optimization control problem, which is a non-linear nonconvex constrained finite time optimal control problem.

15. A vehicle (1) comprising an apparatus for driver assistance (10) according to claim 14.

Fig. 1

Fig. 2

**20**

Fig. 3

(a)

(b)

**Europäisches Patentamt**
**European Patent Office**
**Office européen des brevets**

# EUROPEAN SEARCH REPORT

**Application Number**

EP 23 18 2777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 881 829 A2 (FRAUNHOFER GES FORSCHUNG [DE]) 10 June 2015 (2015-06-10) <br> * claims 1,4; figure 2 * <br> * paragraphs [0009], [0025], [0026], [0033], [0034], [0042], [0043], [0045] – [0047], [0049], [0061], [0072], [0085], [0086] * | 1-17 | INV. <br> B62D15/02 <br> B62D6/00 |
| X | US 10 407 035 B1 (GADDA CHRISTOPHER D [US] ET AL) 10 September 2019 (2019-09-10) <br> * claims 1,4,6; figures 1-16 * <br> * column 5, line 32 – line 51 * <br> * column 6, line 17 – line 24 * <br> * column 7, line 6 – line 22 * <br> * column 18, line 57 – column 19, line 5 * <br> * column 18, line 19 – line 38 * <br> * column 7, lines 23-44 * <br> * column 4, line 61 – column 5, line 8 * | 1-17 | |
| X | US 2020/148261 A1 (VARUNJIKAR TEJAS M [US] ET AL) 14 May 2020 (2020-05-14) <br> * claims 1,3,7; figures 1-7 * <br> * paragraphs [0023], [0030] * | 1-17 | TECHNICAL FIELDS SEARCHED (IPC) <br><br> B62D |

The present search report has been drawn up for all claims

| Place of search | Date of completion of the search | Examiner |
|---|---|---|
| The Hague | 16 November 2023 | Altmann, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 2777

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2023

| Patent document cited in search report | | Publication date | Patent family member(s) | | Publication date |
|---|---|---|---|---|---|
| EP 2881829 | A2 | 10-06-2015 | DE 102013225057 | A1 | 11-06-2015 |
| | | | EP 2881829 | A2 | 10-06-2015 |
| US 10407035 | B1 | 10-09-2019 | US 10407035 | B1 | 10-09-2019 |
| | | | US 10919520 | B1 | 16-02-2021 |
| US 2020148261 | A1 | 14-05-2020 | CN 111186434 | A | 22-05-2020 |
| | | | DE 102019130498 | A1 | 14-05-2020 |
| | | | US 2020148261 | A1 | 14-05-2020 |

EPO FORM P0459

For more details about this annex : see Official Journal of the European Patent Office, No. 12/82